(19) 〔Européisches Patentamt / European Patent Office / Office européen des brevets〕

(11) **EP 4 299 398 B1**

(12) **EUROPEAN PATENT SPECIFICATION**

(45) Date of publication and mention
of the grant of the patent:
**22.10.2025  Bulletin 2025/43**

(21) Application number: **22827337.1**

(22) Date of filing: **31.05.2022**

(51) International Patent Classification (IPC):
**B60W 40/00** *(2006.01)*       **B60G 17/018** *(2006.01)*
**B60W 40/13** *(2012.01)*

(52) Cooperative Patent Classification (CPC):
**B60W 40/13; B60G 17/0182;** B60G 2400/0512;
B60G 2400/106; B60G 2400/204; B60G 2400/30;
B60G 2400/61; B60W 2040/1307;
B60W 2040/1315; B60W 2520/105; B60W 2520/16

(86) International application number:
**PCT/CN2022/096177**

(87) International publication number:
**WO 2022/267840 (29.12.2022 Gazette 2022/52)**

(54) **VEHICLE, LOAD DISTRIBUTION RECOGNITION METHOD AND APPARATUS THEREFOR, MEDIUM, AND ELECTRONIC DEVICE**

FAHRZEUG, LASTVERTEILUNGSERKENNUNGSVERFAHREN UND VORRICHTUNG DAFÜR, MEDIUM UND ELEKTRONISCHE VORRICHTUNG

VÉHICULE, PROCÉDÉ DE RECONNAISSANCE DE RÉPARTITION DE LA CHARGE ET APPAREIL ASSOCIÉ, SUPPORT ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **21.06.2021   CN 202110687601**

(43) Date of publication of application:
**03.01.2024   Bulletin 2024/01**

(73) Proprietor: **BYD Company Limited**
**Shenzhen, Guangdong 518118 (CN)**

(72) Inventors:
• **WANG, Guanwen**
  **Shenzhen, Guangdong 518118 (CN)**

• **LIAO, Yinsheng**
  **Shenzhen, Guangdong 518118 (CN)**
• **ZHANG, Hongzhou**
  **Shenzhen, Guangdong 518118 (CN)**

(74) Representative: **Dehns Germany Partnerschaft mbB**
**Theresienstraße 6-8**
**80333 München (DE)**

(56) References cited:
**CN-A- 103 419 777        CN-A- 103 419 777**
**CN-A- 104 061 899        CN-A- 104 061 899**
**DE-A1- 102014 011 844**

## Description

### FIELD

The present invention relates to the technical field of vehicles, and specifically to a vehicle and a vehicle load distribution identification method and apparatus, and a medium and electronic device.

### BACKGROUND

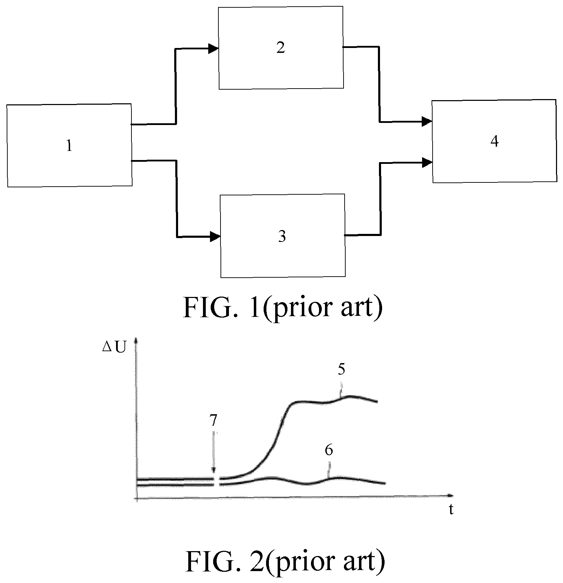

When measuring the load distribution of the front and rear axles of a vehicle, it is generally necessary to install a load sensor or at least two body height sensors at the suspension. In order to avoid installation of the aforementioned sensors at the suspension, it is proposed in the related art to indirectly estimate the front and rear load levels according to deformation of the tire under different normal loads. Specifically, As shown in Fig. 1, 1 represents the wheel speed signal that may come from the wheel speed sensor of the antilock braking system. In 2 and 3, the wheel speed signals of the front and rear wheels are analyzed in terms of frequency spectrum, and in 4, the resonance energies are compared and the load distribution is estimated. Fig. 2 shows the case where the resonance energy varies with the load in an example. 5 represents the resonance energy characteristic value (resonance energy/resonance frequency) of the rear axle, and 6 represents the resonance energy characteristic value of the front axle. The load of the rear axle of the vehicle is increased at 7, and then increase of the characteristic value is detected, thus identifying the change of load distribution.

However, this technology needs to identify the resonance spectrum characteristics of the front and rear wheels, which involves a large amount of calculation, and the rear wheels of most front-wheel-drive vehicle models lack apparent resonance characteristics (or the apparent resonance characteristics can only be identified in some vehicle speed segments), so the corresponding resonance energy characteristic values cannot be obtained. Therefore, this technology has a rather limited application range.

The document CN 103 419 777 A discloses a known method relating to the identification of vehicle load distribution. **SUMMARY**

The present invention is intended to solve one of technical problems in the related art at least to some extent. In view of this, an objective of the present invention is to provide a vehicle load distribution identification method to reduce the cost of vehicle load distribution identification and extend the application range.

A second objective of the present invention is to provide a vehicle load distribution identification apparatus.

A third objective of the present invention is to provide a computer-readable storage medium.

A fourth objective of the present invention is to provide an electronic device.

A fifth objective of the present invention is to provide a vehicle.

In order to achieve the foregoing objectives, an embodiment in a first aspect of the present invention provides a vehicle load distribution identification method including the steps of: acquiring a speed and longitudinal acceleration of the vehicle; acquiring an actual driving force of the vehicle when the longitudinal acceleration is less than an acceleration threshold; obtaining an actual pitch angle of the vehicle according to the actual driving force and the vehicle speed; and obtaining load distribution of the vehicle according to the actual pitch angle.

According to an embodiment of the present invention, the obtaining the actual pitch angle of the vehicle according to the actual driving force and the vehicle speed includes: obtaining a reference driving force corresponding to the vehicle speed according to the vehicle speed and acquiring a reference pitch angle; and obtaining the actual pitch angle according to the actual driving force, the reference driving force and the reference pitch angle.

According to an embodiment of the present invention, the obtaining the actual pitch angle according to the actual driving force, the reference driving force and the reference pitch angle includes: calculating a first difference between the reference driving force and the actual driving force; acquiring the mass of the vehicle and calculating a first ratio of the first difference to the mass; and summing the first ratio with the reference pitch angle to obtain the actual pitch angle.

According to an embodiment of the present invention, the obtaining the actual pitch angle according to the actual driving force, the reference driving force and the reference pitch angle includes: calculating an average of a plurality of the actual driving forces to obtain an average driving force; calculating a second difference between the reference driving force and the average driving force; acquiring the mass of the vehicle and calculating a second ratio of the second difference to the mass; and summing the second ratio with the reference pitch angle to obtain the actual pitch angle.

According to an embodiment of the present invention, the obtaining load distribution of the vehicle according to the actual pitch angle includes: acquiring a front-rear wheelbase, the stiffness of a front suspension and the stiffness of a rear suspension of the vehicle; and calculating the load distribution of the vehicle according to the actual pitch angle, the front-rear wheelbase, the stiffness of the front suspension and the stiffness of the rear suspension.

According to an embodiment of the present invention, the load distribution of the vehicle is calculated by the following equation:

$$\theta = \frac{F_2 / k_2 - F_1 / k_1}{L}$$ , where $\theta$ is the actual pitch angle, $L$ is the front-rear wheelbase, $k_1, k_2$ are

respectively the stiffness of the front suspension and the stiffness of the rear suspension, and $F_1, F_2$ are respectively the front axle load and the rear axle load of the vehicle.

In order to achieve the foregoing objectives, an embodiment in a second aspect of the present invention provides a vehicle load distribution identification apparatus, including: a first acquisition module configured to acquire a speed and longitudinal acceleration of the vehicle; a second acquisition module configured to acquire an actual driving force of the vehicle when the longitudinal acceleration is less than an acceleration threshold; a calculation module configured to obtain an actual pitch angle of the vehicle according to the actual driving force and the vehicle speed; and an identification module configured to obtain load distribution of the vehicle according to the actual pitch angle.

In order to achieve the foregoing objectives, an embodiment in a third aspect of the present invention provides a computer-readable storage medium having a computer program stored thereon, where when executed by a processor, the computer program implements the vehicle load distribution identification method described above.

In order to achieve the foregoing objectives, an embodiment in a fourth aspect of the present invention provides an electronic device, including a memory and a processor, the memory having a computer program stored thereon. When executed by the processor, the computer program implements the vehicle load distribution identification method described above.

In order to achieve the foregoing objectives, an embodiment in a fifth embodiment of the present invention provides a vehicle including the vehicle load distribution identification apparatus according to the embodiment described above or the electronic device according to the embodiment described above.

With the vehicle and the vehicle load distribution identification method and apparatus and the medium and electronic device according to the embodiments of the present invention, the difference between the front and rear axle loads of the vehicle can be identified by calculating the pitch angle of the vehicle, so that the vehicle load distribution can be identified without installing dedicated sensors such as a load sensor and a vehicle body height sensor at the vehicle suspension, which reduces the cost of vehicle load distribution identification and allows a wide range of applications without being limited by the vehicle model.

Additional aspects and advantages of the present invention will partially be given in the following description, and partially become apparent from the following description, or be learned from practices of the present invention.

## BRIEF DESCRIPTION OF THE DRAWINGS

Fig. 1 is a schematic structural diagram of vehicle load distribution identification in the related art;
Fig. 2 is a schematic diagram of variation of the resonance energy with the load in the related art;
Fig. 3 is a flowchart of a vehicle load distribution identification method according to an embodiment of the present invention;
Fig. 4 is a schematic structural diagram of vehicle load distribution identification according to an embodiment of the present invention;
Fig. 5 is a schematic diagram of the pitch angle versus the front and rear axle load of the vehicle according to an embodiment of the present invention;
Fig. 6 is a schematic diagram of the measurement of an acceleration sensor versus the actual longitudinal acceleration of the vehicle according to an embodiment of the present invention;
Fig. 7 is a structural block diagram of a vehicle load distribution identification apparatus according to an embodiment of the present invention;
Fig. 8 is a structural block diagram of an electronic device according to an embodiment of the present invention;
Fig. 9 is a structural block diagram of a vehicle according to an embodiment of the present invention; and
Fig. 10 is a structural block diagram of a vehicle according to another embodiment of the present invention.

## DETAILED DESCRIPTION

Embodiments of the present invention are described in detail below, and examples of the embodiments are shown in the drawings, where the same or similar elements or the elements having same or similar functions are denoted by the same or similar reference numerals throughout the description. The embodiments described below with reference to the drawings are exemplary and intended to explain the present invention, and shall not be construed as limitation of the present invention.

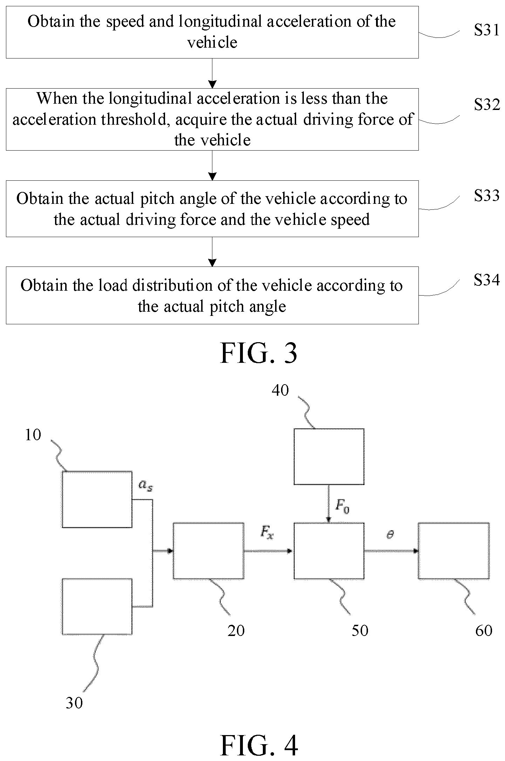

The vehicle and the vehicle load distribution identification method and apparatus and the medium and electronic device according to embodiments of the present invention will be described below with reference to Figs. 3-10.

First, the principle of vehicle load distribution identification according to the embodiment of the present invention will be explained.

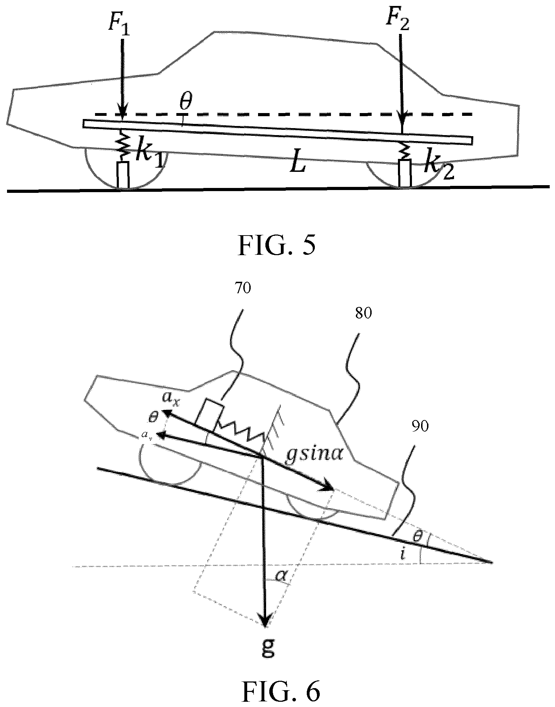

As shown in Fig. 5, the front axle load $F_1$ and the rear axle load $F_2$ are applied to the front and rear suspensions respectively, which changes the height of the suspensions, thus causing the change of the pitch angle. Based on this principle, the difference between the front axle load and the rear axle load can be estimated according to the change of the pitch angle.

Specifically, the stiffness of the front suspension $k_1$, the stiffness of the rear suspension $k_2$ and the front-rear wheelbase L of the vehicle are acquired from the vehicle parameters, so the relation between the front-rear axle loads and the pitch angle $\theta$ is:

$$\theta = \frac{F_2 / k_2 - F_1 / k_1}{L}.$$

As an example, if the stiffnesses of the front and rear suspensions are approximately equal and assumed as k, the pitch angle $\theta$ and the difference between the front and rear axle loads $\Delta F$ can be simplified as a direct proportion relation:

$$\theta = \frac{\Delta F}{kL}.$$

Therefore, the difference between the front and rear axle loads can be obtained by estimating the pitch angle.

Fig. 6 shows the measurement of the acceleration sensor versus the actual longitudinal acceleration of the vehicle. Referring to Fig. 6, when the vehicle travels on a road 90 with a certain slope, the acceleration sensor 70 is fixed on the vehicle body 80, so its levelness in the longitudinal direction (vehicle traveling direction) is affected jointly by the pitch angle and the road slope. In Fig. 6, $\alpha$ is the longitudinal included angle between the inertia component of the acceleration sensor and the horizontal plane, the road slope angle is i, and the pitch angle of the vehicle is $\theta$, then the relation between the angles is: $\alpha = \theta + i$.

As the acceleration sensor is not kept horizontal, the longitudinal acceleration $a_s$ measured by it includes the components of the longitudinal acceleration of the vehicle $a_v$ and the acceleration of gravity in the measurement direction of the sensor: $a_s = a_v \cos\theta + g \sin\alpha$.

The above equation can be approximated as: $a_s = a_v + gi + g\theta$

The longitudinal dynamic equation during travel of the vehicle is as follows:

$$F_t = F_w + F_f + mgi + \delta ma_v,$$

where $F_t$ is the driving force, $F_w$ is the air resistance, $F_f$ is the rolling resistance, $m$ is the mass of the vehicle, $g$ is the acceleration of gravity, i is the slope and $\delta$ is the conversion coefficient of rotating mass. At a higher gear (lower speed ratio), the conversion coefficient of rotating mass is close to 1. At this time, the longitudinal dynamic equation of the vehicle is simplified as:

$$F_t = F_w + F_f + m(a_v + gi).$$

Substituting the acceleration $a_s$ measured by the acceleration sensor into the above equation, we can obtain:

$$F_t = F_w + F_f + m(a_s - g\theta).$$

When $a_s = 0$, we can obtain from the equation above:

$$F_t = F_w + F_f + mg\theta.$$

Because the relation between the rolling resistance $F_f$ and the vehicle speed is weak, and the relation between the air resistance $F_w$ and the vehicle speed is approximately quadratic, and its coefficient (that is, the air resistance coefficient) is only related to the shape of the vehicle, the difference in rolling resistance is ignored, and it can be considered that the same vehicle with different loads experiences the same resistance $F_w + F_f$ when the vehicle speed is the same or similar. Therefore, the difference in pitch angle of the same vehicle traveling at the same speed in different load conditions can be calculated by the following equation (where $F_{t,1}$ is the driving force in load condition 1 when $a_s = 0$; and $F_{t,2}$ is the driving force in load condition 2 when $a_s = 0$):

$$\Delta\theta = \frac{F_{t,1}\big|_{a_s=0} - F_{t,2}\big|_{a_s=0}}{mg}.$$

Based on the foregoing principle, the present invention provides a vehicle load distribution identification method. Fig. 3 is a flowchart of a vehicle load distribution identification method according to an embodiment of the present invention.

It should be noted that before performing this vehicle load distribution identification method, the model of correspondence between the load distribution and the reference driving force $F_0$ and the reference pitch angle $\theta_0$ needs to be calibrated. Specifically, the reference driving force $F_0$ and the reference pitch angle $\theta_0$ can be calibrated when the vehicle is in a state with a known load distribution.

Specifically, a time interval can be set, and when the vehicle is controlled to run at various vehicle speeds, the acceleration sensor 10 acquires the longitudinal acceleration at the set time interval. Then, a driving force statistical calculation module 30 (which may be a recursive least square RLS, Kalman filter or other filters) calculates the driving force corresponding to the longitudinal acceleration measurement (approximation) less than the acceleration threshold, and the driving force can be obtained by multiplying the torque output by the power source (the driving motor of the vehicle) by the speed ratio of the transmission system; Then it can calculate the average of the driving forces to obtain the reference driving force corresponding to each vehicle speed. Optionally, N driving forces can be selected to calculate the average, where N is an integer greater than 1 and may assume a value of 3, 4, 5, etc. The acceleration threshold can be calibrated according to experiments, and the acceleration threshold can be different for different vehicle models.

The reference driving force $F_0$ output by the driving force statistical calculation module 30 can be stored in different units of the storage module 40 divided based on the vehicle speeds according to the current vehicle speed. Meanwhile, the reference pitch angle data $\theta_0$ calculated (or directly measured) according to the current load distribution can also be stored in the storage module 40.

As shown in Fig. 3, the vehicle load distribution identification method includes the following steps.

S31: the speed and longitudinal acceleration of the vehicle are obtained.

Specifically, the longitudinal acceleration $a_s$ of the vehicle can be collected by the acceleration sensor 10 shown in 4, and the vehicle speed can be collected by the vehicle speed sensor, where both the acceleration sensor and the vehicle speed sensor can be installed on the vehicle body. Alternatively, the vehicle speed can also be calculated based on the wheel speed of the vehicle, and the wheel speed can be collected by the wheel speed sensor installed on the wheel.

S32: When the longitudinal acceleration is less than the acceleration threshold, the actual driving force of the vehicle is acquired.

As a feasible implementation, referring to Fig. 4, the acceleration sensor 10 can collect the longitudinal acceleration $a_s$ at a certain time interval. The driving force statistical calculation module 30 can calculate the actual driving force corresponding to the longitudinal acceleration $a_s$ less than the acceleration threshold, and the actual driving force can be specifically calculated by multiplying the torque output by the driving motor of the vehicle by the speed ratio of the transmission system. Specifically, the actual driving force of the vehicle can be acquired once every time it is determined that the longitudinal acceleration is less than the acceleration threshold.

S33: the actual pitch angle of the vehicle is obtained according to the actual driving force and the vehicle speed.

As a feasible implementation, the obtaining the actual pitch angle of the vehicle according to the actual driving force and the vehicle speed can include: obtaining the corresponding reference driving force according to the vehicle speed and acquiring the reference pitch angle; and obtaining the actual pitch angle according to the actual driving force, the reference driving force and the reference pitch angle. The preset value can be calibrated as required.

In this implementation, the obtaining the actual pitch angle according to the actual driving force, the reference driving force and the reference pitch angle can include: calculating a difference between the reference driving force and the actual driving force; acquiring the mass of the vehicle and calculating a ratio of the difference to the mass; and summing the ratio with the reference pitch angle to obtain the actual pitch angle.

Specifically, referring to Fig. 4, the driving force statistical calculation module 30 can output the actual driving force to the pitch angle calculation module 50, and the pitch angle calculation module 50 compares the actual driving force $F$ with the reference driving force $F_0$ corresponding to the current vehicle speed in the storage module 40 and calculates the actual pitch angle $\theta$ of the vehicle according to the following equation:

$$\theta = \theta_0 + \frac{F_0 - F}{mg},$$

where $\theta_0$ is the reference pitch angle, which can be obtained from the storage module 40; $m$ is the mass of the vehicle and $g$ is the acceleration of gravity.

In this implementation, the obtaining the actual pitch angle according to the actual driving force, the reference driving force and the reference pitch angle can also include: calculating an average of multiple actual driving forces to obtain an average driving force; calculating a difference between the reference driving force and the average driving force; acquiring the mass of the vehicle and calculating a ratio of the difference to the mass; and summing the ratio with the reference pitch angle to obtain the actual pitch angle.

Specifically, the average driving force can be calculated within a certain period of time. For example, counting is started when it is determined that the longitudinal acceleration is less than the acceleration threshold, and the longitudinal acceleration is continuously monitored. If all the longitudinal accelerations are less than the acceleration threshold within a preset time, or the proportion of the longitudinal accelerations less than the acceleration threshold is greater than a certain value, the average of all the actual driving forces obtained within the preset time is calculated to obtain the average driving force. The average driving force can also be calculated by statistically counting the number of the actual driving forces. For example, every time it is determined that the longitudinal acceleration is less than the acceleration threshold, an actual driving force is obtained. When the number of the actual driving forces reaches a preset value, the average of the preset number of actual driving forces is calculated to obtain the average driving force. Referring to Fig. 4, after obtaining multiple actual driving forces, the driving force statistical calculation module 30 can further calculate the average of the actual driving forces $F_x$. The pitch angle calculation module 50 compares the average of the driving forces $F_x$ output by the driving force statistical calculation module 30 with the reference driving force $F_0$ corresponding to the current vehicle speed in the storage module 40, and calculates the actual pitch angle $\theta$ of the vehicle according to the following equation:

$$\theta = \theta_0 + \frac{F_0 - F_x}{mg},$$

where $\theta_0$ is the reference pitch angle, which can be obtained from the storage module 40; $m$ is the mass of the vehicle and $g$ is the acceleration of gravity.

S34: the load distribution of the vehicle is obtained according to the actual pitch angle.

As a feasible implementation, the obtaining the load distribution of the vehicle according to the actual pitch angle can include: acquiring a front-rear wheelbase, the stiffness of a front suspension and the stiffness of a rear suspension of the vehicle; and calculating the load distribution of the vehicle according to the actual pitch angle, the front-rear wheelbase, the stiffness of the front suspension and the stiffness of the rear suspension.

Specifically, referring to Fig. 4, the load distribution meter module 60 can calculate the front-rear load distribution of the vehicle according to the actual pitch angle $\theta$ output by the pitch angle calculation module 50 and the pre-stored vehicle information (including the front-rear wheelbase, the stiffness of the front suspension and the stiffness of the rear suspension). Specifically, the load distribution of the vehicle can be calculated by the following equation:

$$\theta = \frac{F_2 / k_2 - F_1 / k_1}{L},$$

where $\theta$ is the actual pitch angle, $L$ is the front-rear wheelbase, $k_1, k_2$ are respectively the stiffness of the front suspension and the stiffness of the rear suspension, and $F_1, F_2$ are respectively the front axle load and the rear axle load of the vehicle.

In an embodiment, the obtained static load distribution of the front and rear axles of the vehicle can be used to improve the performance of the following systems: the Antilock Brake System (ABS), the Electronic Stability Program (ESP), the Traction Control System (TCS), the Electric Brakeforce Distribution (EBD), the active suspension Active Body Control (ABC), Anti Rolling Program (ARP), headlight range control, tire pressure monitoring, and the like.

With the vehicle load distribution identification method according to the embodiment of the present invention, the vehicle load is not directly measured, instead, the pitch angle of the vehicle is estimated and then the difference between the front axle and rear axle loads can be calculated according to the statics knowledge. As such, the vehicle load distribution can be identified without installing dedicated sensors such as a load sensor and a vehicle body height sensor at the vehicle suspension, which reduces the cost of vehicle load distribution identification and allows a wide range of applications without being limited by the vehicle model.

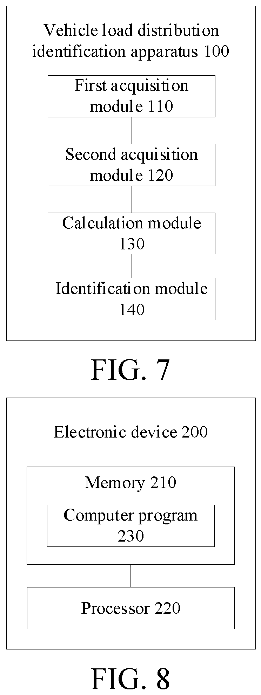

Fig. 7 is a structural block diagram of a vehicle load distribution identification apparatus according to an embodiment of the present invention.

As shown in Fig. 7, the vehicle load distribution identification apparatus 100 includes: a first acquisition module 110, a second acquisition module 120, a calculation module 130 and an identification module 140.

The first acquisition module 110 is configured to acquire a speed and longitudinal acceleration of the vehicle; the second acquisition module 120 is configured to acquire, through statistical calculation, an actual driving force of the vehicle when the longitudinal acceleration is less than an acceleration threshold; the calculation module 130 is configured to obtain an actual pitch angle of the vehicle according to the actual driving force and vehicle speed; and the identification module 140 is configured to obtain load distribution of the vehicle according to the actual pitch angle.

As a feasible implementation, the calculation module 130 is specifically configured to: when the number of actual driving forces acquired by the second acquisition module 120 reaches a preset value, calculate the average of the preset number of actual driving forces to obtain the average driving force; obtain the corresponding reference driving force according to the vehicle speed and obtain a reference pitch angle; and obtain the actual pitch angle according to the average driving force, the reference driving force and the reference pitch angle.

The calculation module 130 is specifically configured to, in obtaining the actual pitch angle according to the average driving force and the reference driving force: calculate a difference between the reference driving force and the average driving force; acquire the mass of the vehicle and calculating a ratio of the difference to the mass; and summing the ratio with the reference pitch angle to obtain the actual pitch angle.

As a feasible implementation, the identification module 140 is specifically configured to: acquire a front-rear wheelbase, the stiffness of a front suspension and the stiffness of a rear suspension of the vehicle; and calculate the load distribution of the vehicle according to the actual pitch angle, the front-rear wheelbase, the stiffness of the front suspension and the stiffness of the rear suspension.

Specifically, the load distribution of the vehicle can be calculated by the following equation:

$$\theta = \frac{F_2 / k_2 - F_1 / k_1}{L},$$

where $\theta$ is the actual pitch angle, $L$ is the front-rear wheelbase, $k_1, k_2$ are respectively the stiffness of the front suspension and the stiffness of the rear suspension, and $F_1, F_2$ are respectively the front axle load and the rear axle load of the vehicle.

It should be noted that, for other specific implementations of the vehicle load distribution identification apparatus 100 according to the embodiment of the present invention, reference may be made to the specific implementations of the vehicle load distribution identification method of the above embodiment of the present invention.

With the vehicle load distribution identification apparatus 100 according to the embodiment of the present invention, the vehicle load distribution can be identified without installing dedicated sensors such as a load sensor and a vehicle body height sensor at the vehicle suspension, which reduces the cost of vehicle load distribution identification and allows a wide range of applications without being limited by the vehicle model .

The present invention provides a computer-readable storage medium.

In this embodiment, the computer-readable storage medium has a computer program stored thereon, which, when executed by a processor, implements the vehicle load distribution identification method described above.

With the computer-readable storage medium according to the embodiment of the present invention, when the computer program stored thereon for the vehicle load distribution identification method described above is executed by a processor, the vehicle load distribution can be identified without installing dedicated sensors such as a load sensor and a vehicle body height sensor at the vehicle suspension, which reduces the cost of vehicle load distribution identification and allows a wide range of applications without being limited by the vehicle model.

In an embodiment, the present invention further provides an electronic device.

In this embodiment, as shown in Fig. 8, the electronic device 200 includes a memory 210 and a processor 220. The memory 210 has a computer program 230 stored thereon, which, when executed by the processor 220, implements the vehicle load distribution identification method described above.

With the electronic device 200 according to the embodiment of the present invention, when the computer program 230 stored in the memory 210 thereof for the vehicle load distribution identification method described above is executed by the processor 220, the vehicle load distribution can be identified without installing dedicated sensors such as a load sensor and a vehicle body height sensor at the vehicle suspension, which reduces the cost of vehicle load distribution identification and allows a wide range of applications without being limited by the vehicle model.

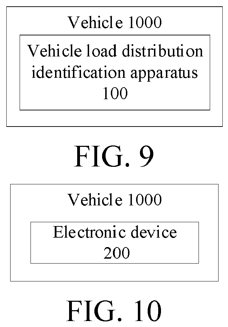

Fig. 9 is a structural block diagram of a vehicle according to an embodiment of the present invention.

As shown in Fig. 9, the vehicle 1000 includes the vehicle load distribution identification apparatus 100 according to the embodiment described above.

Fig. 10 is a structural block diagram of a vehicle according to another embodiment of the present invention.

As shown in Fig. 10, the vehicle 1000 includes the electronic device 200 according to the embodiment described above.

With the vehicle according to the embodiment described above, by use of the load distribution identification apparatus 100 or the electronic device 200 described above, it is not necessary to install dedicated sensors such as a load sensor and a vehicle body height sensor at the vehicle suspension, which reduces the cost of vehicle load distribution identification and allows a wide range of applications without being limited by the vehicle model.

It should be noted that the logic and/or steps shown in the flowcharts or described in any other manner herein, for example, a sequenced list that may be considered as executable instructions for implementing logical functions, may be embodied in any computer-readable medium to be used by an instruction execution system, apparatus, or device (for example, a computer-based system, a system including a processor, or another system that can fetch an instruction from the instruction execution system, apparatus, or device and execute the instruction) or to be used in combination with such instruction execution systems, apparatuses, or devices. In this specification, the term "computer-readable medium" may be any apparatus that can contain, store, communicate, propagate, or transmit programs to be used by the instruction execution system, apparatus or device or to be used in combination with such instruction execution systems, apparatuses or devices. More specific examples (a non-exhaustive list) of the computer-readable medium include: an electrical connection part (electronic device) having one or more wires, a portable computer diskette (magnetic apparatus), a random access memory (RAM), a read-only memory (ROM), an erasable programmable read-only memory (EPROM or flash memory), an optical fiber apparatus, and a portable compact disk read-only memory (CDROM). In addition, the computer-readable medium can even be paper or other suitable media on which the program can be printed, because the program can be obtained electronically by, for example, optically scanning the paper or other media, then editing, interpreting, or processing in other suitable ways if necessary, and then storing it in a computer memory.

It should be understood that, various parts of the present invention can be implemented in hardware, software, firmware, or a combination thereof. In the foregoing implementations, multiple steps or methods may be implemented by using software or firmware that are stored in a memory and executed by a proper instruction execution system. For example, if implementation is made in hardware, as in another implementation, implementation may be realized by any one of the following technologies well known in the art or a combination thereof: a discrete logic circuit including a logic gate circuit for implementing a logic function for a data signal, a dedicated integrated circuit including a proper combined logic gate circuit, a programmable gate array (PGA), a field programmable gate array (FPGA), and the like.

In the descriptions of this specification, descriptions of a reference term such as "an embodiment," "some embodiments," "an example," "a specific example," or "some examples" means that a specific feature, structure, material, or characteristic that is described with reference to the embodiment or the example is included in at least one embodiment or example of the present application. In this specification, exemplary expressions of the foregoing terms do not necessarily refer to the same embodiment or example. In addition, the described specific features, structures, materials, or characteristics may be combined in a proper manner in any one or more of the embodiments or examples.

In the description of the present invention, it should be understood that orientation or position relations indicated by the terms such as "center", "longitudinal", "transverse", "length", "width", "thickness", "above", "below", "front", "back", "left", "right", "vertical", "horizontal", "top", "bottom", "inside", "outside", "clockwise", "anticlockwise", "axial direction", "radial direction", and "circumferential direction" are based on orientation or position relations shown in the drawings, and are used merely for ease and brevity of illustration and description, rather than indicating or implying that the mentioned apparatus or element must have a particular orientation or must be constructed and operated in a particular orientation. Therefore, such terms should not be construed as limitation of the present invention.

In addition, the terms "first" and "second" are used merely for the purpose of description, and shall not be construed as indicating or implying relative importance or implying a quantity of indicated technical features. Therefore, a feature defined by the term "first" or "second" may explicitly indicate or implicitly include at least one of such features. In description of the present invention, the term "multiple" means at least two, such as two and three, unless it is specifically defined otherwise.

In the present disclosure, unless otherwise explicitly specified or defined, the terms such as "install", "joint", "connect", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediary medium, or internal communication between two elements or mutual reaction relation between two elements, unless otherwise explicitly specified. A person of ordinary skill in the art may understand the specific meanings of the foregoing terms in the present disclosure according to specific contexts.

In the present disclosure, unless otherwise explicitly specified or defined, the first feature being located "above" or "below" the second feature may indicate the first feature is in direct contact with the second feature, or the first feature is in indirect contact with the second feature through an intermediary medium. In addition, the first feature being "above", "over", or "on" the second feature may indicate that the first feature is directly above or obliquely above the second feature, or may merely indicate that the horizontal position of the first feature is higher than that of the second feature. The first feature being "below", "under", and "beneath" the second feature may indicate that the first feature is right below the second feature or obliquely below the second feature, or may merely indicate that the horizontal position of the first feature is lower than that of the second feature.

Although the embodiments of the present invention have been shown and described above, it can be understood that the above embodiments are exemplary and should not be understood as limitation of the present invention. A person of ordinary skill in the art can make changes, modifications, replacements, or variations to the above embodiments within the scope of the present invention as defined in the appended claims.

## Claims

1. A vehicle load distribution identification method, comprising the steps of:

     acquiring a (S31) speed and longitudinal acceleration of the vehicle;
     acquiring (S32) an actual driving force of the vehicle when the longitudinal acceleration is less than an acceleration threshold;
     obtaining (S33) an actual pitch angle ($\theta$) of the vehicle according to the actual driving force and the vehicle speed; and
     obtaining (S34) load distribution of the vehicle according to the actual pitch angle.

2. The vehicle load distribution identification method of claim 1, wherein the obtaining (S33) an actual pitch angle ($\theta$) of the vehicle according to the actual driving force and the vehicle speed comprises:

     obtaining a reference driving force corresponding to the vehicle speed according to the vehicle speed and acquiring a reference pitch angle; and

obtaining the actual pitch angle according to the actual driving force, the reference driving force and the reference pitch angle.

3. The vehicle load distribution identification method of claim 2, wherein the obtaining (S33) the actual pitch angle ($\theta$) according to the actual driving force, the reference driving force and the reference pitch angle comprises:

calculating a first difference between the reference driving force and the actual driving force; acquiring the mass of the vehicle and calculating a first ratio of the first difference to the mass; and summing the first ratio with the reference pitch angle to obtain the actual pitch angle.

4. The vehicle load distribution identification method of claim 2, wherein the obtaining (S33) the actual pitch angle ($\theta$) according to the actual driving force, the reference driving force and the reference pitch angle comprises:

calculating an average of the plurality of actual driving forces to obtain an average driving force; calculating a second difference between the reference driving force and the average driving force; acquiring the mass of the vehicle and calculating a second ratio of the second difference to the mass; and summing the second ratio with the reference pitch angle to obtain the actual pitch angle.

5. The vehicle load distribution identification method of claim 1, wherein the obtaining (S34) load distribution of the vehicle according to the actual pitch angle comprises:

acquiring a front-rear wheelbase, the stiffness of a front suspension and the stiffness of a rear suspension of the vehicle; and calculating the load distribution of the vehicle according to the actual pitch angle, the front-rear wheelbase, the stiffness of the front suspension and the stiffness of the rear suspension.

6. The vehicle load distribution identification method of claim 1, wherein the load distribution of the vehicle is calculated by the following equation:

$$ \theta = \frac{F_2 / k_2 - F_1 / k_1}{L}, $$

where $\theta$ is the actual pitch angle, $L$ is the front-rear wheelbase, $k_1, k_2$ are respectively the stiffness of the front suspension and the stiffness of the rear suspension, and $F_1, F_2$ are respectively the front axle load and the rear axle load of the vehicle.

7. A vehicle load distribution identification apparatus (100), comprising:

a first acquisition module (110) configured to acquire a speed and longitudinal acceleration of the vehicle; a second acquisition module (120) configured to acquire an actual driving force of the vehicle when the longitudinal acceleration is less than an acceleration threshold; a calculation module (130) configured to obtain an actual pitch angle of the vehicle according to the actual driving force and the vehicle speed; and an identification module (140) configured to obtain load distribution of the vehicle according to the actual pitch angle.

8. A computer-readable storage medium (210) having a computer program (230) stored thereon, when executed by a processor (220), the computer program implements the vehicle load distribution identification method of any one of claims 1 to 6.

9. An electronic device (200), comprising a memory (210) and a processor (212), the memory (210) having a computer program (230) stored thereon, when executed by a processor, the computer program implements the vehicle load distribution identification method of any one of claims 1 to 6.

10. A vehicle, comprising:
a vehicle load distribution identification apparatus (100) of claim 7 or an electronic device (200) of claim 9.

**Patentansprüche**

1. Verfahren zur Identifizierung der Lastverteilung eines Fahrzeugs, mit den folgenden Schritten:

Erfassen (S31) einer Geschwindigkeit und einer Längsbeschleunigung des Fahrzeugs; Erfassen (S32) einer tatsächlichen Antriebskraft des Fahrzeugs, wenn die Längsbeschleunigung kleiner als ein Beschleunigungsschwellenwert ist; Erhalten (S33) eines tatsächlichen Neigungs- bzw. Steigungswinkels ($\theta$) des Fahrzeugs gemäß der tatsächlichen Antriebskraft und der Fahrzeuggeschwindigkeit; und

Erhalten (S34) einer Lastverteilung des Fahrzeugs gemäß dem tatsächlichen Neigungswinkel.

2.  Verfahren zur Identifizierung der Fahrzeuglastverteilung gemäß Anspruch 1, wobei das Ermitteln (S33) eines tatsächlichen Neigungswinkels ($\theta$) des Fahrzeugs gemäß der tatsächlichen Antriebskraft und der Fahrzeuggeschwindigkeit umfasst:

    Erhalten einer Referenzantriebskraft, die der Fahrzeuggeschwindigkeit entspricht, gemäß der Fahrzeuggeschwindigkeit und Erfassen eines Referenzneigungswinkels; und
    Ermitteln des tatsächlichen Neigungswinkels entsprechend der tatsächlichen Antriebskraft, der Referenzantriebskraft und des Referenzneigungswinkels.

3.  Verfahren zur Identifizierung der Fahrzeuglastverteilung gemäß Anspruch 2, wobei das Ermitteln (S33) des tatsächlichen Neigungswinkels ($\theta$) gemäß der tatsächlichen Antriebskraft, der Referenzantriebskraft und des Referenzneigungswinkels umfasst:

    Berechnen einer ersten Differenz zwischen der Referenzantriebskraft und der tatsächlichen Antriebskraft; Erfassen der Masse des Fahrzeugs und Berechnen eines ersten Verhältnisses der ersten Differenz zur Masse; und
    Summieren des ersten Verhältnisses mit dem Referenz-Neigungswinkel, um den tatsächlichen Neigungswinkel zu erhalten.

4.  Verfahren zur Identifizierung der Fahrzeuglastverteilung gemäß Anspruch 2, wobei das Ermitteln (S33) des tatsächlichen Neigungswinkels ($\theta$) gemäß der tatsächlichen Antriebskraft, der Referenzantriebskraft und des Referenzneigungswinkels umfasst:

    Berechnen eines Durchschnitts der mehreren tatsächlichen Antriebskräfte, um eine durchschnittliche Antriebskraft zu erhalten;
    Berechnen einer zweiten Differenz zwischen der Referenzantriebskraft und der durchschnittlichen Antriebskraft;
    Erfassen der Masse des Fahrzeugs und Berechnen eines zweiten Verhältnisses der zweiten Differenz zur Masse; und
    Summieren des zweiten Verhältnisses mit dem Referenzneigungswinkel, um den tatsächlichen Neigungswinkel zu erhalten.

5.  Verfahren zur Identifizierung der Fahrzeuglastverteilung gemäß Anspruch 1, wobei das Ermitteln (S34) der Lastverteilung des Fahrzeugs gemäß dem tatsächlichen Neigungswinkel umfasst:

    Erfassen eines vorderen und hinteren Radstands, der Steifigkeit einer vorderen Aufhängung und der Steifigkeit einer hinteren Aufhängung des Fahrzeugs; und
    Berechnen der Lastverteilung des Fahrzeugs gemäß dem tatsächlichen Neigungswinkel, dem vorderen und hinteren Radstand, der Steifigkeit der vorderen Aufhängung und der Steifigkeit der hinteren Aufhängung.

6.  Verfahren zur Ermittlung der Fahrzeuglastverteilung nach Anspruch 1, wobei die Lastverteilung des Fahrzeugs durch die folgende Gleichung berechnet wird:

$$\theta = \frac{F_2 \,/\, k_2 - F_1 \,/\, k_1}{L},$$

    wobei $\theta$ der tatsächliche Neigungswinkel ist, $L$ der Radstand zwischen Vorder- und Hinterachse ist, $k_1, k_2$ jeweils die Steifigkeit der Vorderradaufhängung und die Steifigkeit der Hinterradaufhängung sind und $F_1, F_2$ jeweils die Vorderachslast und die Hinterachslast des Fahrzeugs sind.

7.  Vorrichtung (100) zur Identifizierung der Lastverteilung eines Fahrzeugs, umfassend:

    ein erstes Erfassungsmodul (110), das dazu konfiguriert ist, eine Geschwindigkeit und eine Längsbeschleunigung des Fahrzeugs zu erfassen;
    ein zweites Erfassungsmodul (120), das dazu konfiguriert ist, eine tatsächliche Antriebskraft des Fahrzeugs zu erfassen, wenn die Längsbeschleunigung kleiner als ein Beschleunigungsschwellenwert ist;
    ein Berechnungsmodul (130), das dazu konfiguriert ist, einen tatsächlichen Neigungs- bzw. Steigungswinkel des Fahrzeugs entsprechend der tatsächlichen Antriebskraft und der Fahrzeuggeschwindigkeit zu ermitteln; und
    ein Identifizierungsmodul (140), das dazu konfiguriert ist, eine Lastverteilung des Fahrzeugs gemäß dem tatsächlichen Neigungswinkel zu erhalten.

8.  Computerlesbares Speichermedium (210) mit einem darauf gespeicherten Computerprogramm (230), wobei das Computerprogramm, wenn es von einem Prozessor (220) ausgeführt wird, das Verfahren zur Identifizierung der Fahrzeuglastverteilung nach einem der Ansprüche 1 bis 6 implementiert.

9.  Elektronische Vorrichtung (200), die einen Speicher (210) und einen Prozessor (212) umfasst, wobei der Speicher (210) ein darauf gespeichertes Computerprogramm (230) aufweist, wobei das Computerprogramm, wenn es von einem Prozessor ausgeführt wird, das Verfahren zur Identifizierung der Fahrzeuglastverteilung gemäß einem der Ansprüche 1 bis 6 implementiert.

10. Fahrzeug, umfassend:
eine Fahrzeuglastverteilungsidentifizierungsvorrichtung (100) nach Anspruch 7 oder eine elektronische Vorrichtung (200) nach Anspruch 9.

## Revendications

1. Procédé d'identification de la répartition de la charge d'un véhicule, comprenant les étapes consistant à :

   acquérir (S31) une vitesse et une accélération longitudinale du véhicule ;
   acquérir (S32) une force motrice réelle du véhicule lorsque l'accélération longitudinale est inférieure à un seuil d'accélération ;
   obtenir (S33) un angle de tangage réel (θ) du véhicule selon la force motrice réelle et la vitesse du véhicule ; et
   obtenir (S34) une répartition de charge du véhicule selon l'angle de tangage réel.

2. Procédé d'identification de la répartition de la charge d'un véhicule selon la revendication 1, dans lequel obtenir (S33) un angle de tangage réel (θ) du véhicule selon la force motrice réelle et la vitesse du véhicule comprend :

   obtenir une force motrice de référence correspondant à la vitesse du véhicule selon la vitesse du véhicule et acquérir un angle de tangage de référence ; et
   obtenir l'angle de tangage réel selon la force motrice réelle, la force motrice de référence et l'angle de tangage de référence.

3. Procédé d'identification de la répartition de la charge d'un véhicule selon la revendication 2, dans lequel obtenir (S33) l'angle de tangage réel (θ) selon la force motrice réelle, la force motrice de référence et l'angle de tangage de référence comprend :

   calculer une première différence entre la force motrice de référence et la force motrice réelle ;
   acquérir la masse du véhicule et calculer un premier rapport entre la première différence et la masse ; et
   additionner le premier rapport à l'angle de tangage de référence pour obtenir l'angle de tangage réel.

4. Procédé d'identification de la répartition de la charge d'un véhicule selon la revendication 2, dans lequel l'obtention (S33) de l'angle de tangage réel (θ) selon la force motrice réelle, la force motrice de référence et l'angle de tangage de référence comprend :

   calculer une moyenne de la pluralité de forces motrices réelles pour obtenir une force motrice moyenne ;
   calculer une deuxième différence entre la force motrice de référence et la force motrice moyenne ;
   acquérir la masse du véhicule et calculer un deuxième rapport entre la deuxième différence et la masse ; et
   additionner le deuxième rapport avec l'angle de tangage de référence pour obtenir l'angle de tangage réel.

5. Procédé d'identification de la répartition de la charge d'un véhicule selon la revendication 1, dans lequel l'obtention (S34) de la répartition de la charge du véhicule selon l'angle de tangage réel comprend :

   l'acquisition d'un empattement avant-arrière, de la rigidité d'une suspension avant et de la rigidité d'une suspension arrière du véhicule ; et
   calculer la répartition de charge du véhicule selon l'angle de tangage réel, l'empattement avant-arrière, la rigidité de la suspension avant et la rigidité de la suspension arrière.

6. Procédé d'identification de la répartition de la charge d'un véhicule selon la revendication 1, dans lequel la répartition de la charge du véhicule est calculée par l'équation suivante :

$$\theta = \frac{F_2 \, / \, k_2 \, - \, F_1 \, / \, k_1}{L},$$

où $\theta$ est l'angle de tangage réel, $L$ est l'empattement avant-arrière, $k_1, k_2$ sont respectivement la rigidité de la suspension avant et la rigidité de la suspension arrière, et $F_1, F_2$ sont respectivement la charge sur l'essieu avant et la charge sur l'essieu arrière du véhicule.

7. Dispositif d'identification de la répartition de la charge d'un véhicule (100), comprenant :

   un premier module d'acquisition (110) configuré pour acquérir une vitesse et une accélération longitudinale du véhicule ;
   un deuxième module d'acquisition (120) configuré pour acquérir une force motrice réelle du véhicule lorsque l'accélération longitudinale est inférieure à un seuil d'accélération ;

un module de calcul (130) configuré pour obtenir un angle de tangage réel du véhicule selon la force motrice réelle et la vitesse du véhicule ; et un module d'identification (140) configuré pour obtenir la répartition de la charge du véhicule selon l'angle de tangage réel.

8. Support de stockage lisible par ordinateur (210) comportant un programme informatique (230) stocké sur celui-ci, lorsque celui-ci est exécuté par un processeur (220), le programme informatique implémente le procédé d'identification de la répartition de la charge d'un véhicule selon l'une quelconque des revendications 1 à 6.

9. Dispositif électronique (200) comprenant une mémoire (210) et un processeur (212), la mémoire (210) ayant un programme informatique (230) stocké sur celle-ci, lorsque le programme informatique est exécuté par un processeur, le programme informatique implémente le procédé d'identification de la répartition de la charge d'un véhicule selon l'une quelconque des revendications 1 à 6.

10. Véhicule comprenant :
un appareil d'identification de répartition de charge de véhicule (100) selon la revendication 7 ou un dispositif électronique (200) selon la revendication 9.

FIG. 1(prior art)

FIG. 2(prior art)

| Obtain the speed and longitudinal acceleration of the vehicle | S31 |

| When the longitudinal acceleration is less than the acceleration threshold, acquire the actual driving force of the vehicle | S32 |

| Obtain the actual pitch angle of the vehicle according to the actual driving force and the vehicle speed | S33 |

| Obtain the load distribution of the vehicle according to the actual pitch angle | S34 |

FIG. 3

FIG. 4

FIG. 5

FIG. 6

Vehicle load distribution
identification apparatus 100

First acquisition
module 110

Second acquisition
module 120

Calculation module
130

Identification module
140

FIG. 7

Electronic device 200

Memory 210

Computer program
230

Processor 220

FIG. 8

| Vehicle 1000 |
|---|
| Vehicle load distribution identification apparatus 100 |

# FIG. 9

| Vehicle 1000 |
|---|
| Electronic device 200 |

# FIG. 10

**REFERENCES CITED IN THE DESCRIPTION**

**Patent documents cited in the description**

- CN 103419777 A